# EUROPEAN PATENT APPLICATION

(11) **EP 4 224 166 A1**
(43) Date of publication of application: **09.08.2023**
(21) Application number: 21874771.5
(22) Date of filing: 05.03.2021
(51) Int. Cl.: G01N 35/00, G01N 35/02

(54) **AUTOMATED ANALYZER**

(30) Priority: 29.09.2020 JP 2020163437
(71) Applicant: HITACHI HIGH-TECH CORPORATION, Tokyo 105-6409 (JP)
(72) Inventor: YOKOYAMA, Kohei, Tokyo 105-6409 (JP); YAGI, Kenichi, Tokyo 105-6409 (JP); AOYAGI, Shota, Tokyo 105-6409 (JP)
(74) Representative: Strehl Schübel-Hopf & Partner
(86) International application number: PCT/JP2021/008784
(87) International publication number: WO 2022/070463

(57) **Abstract**

In an automatic analyzer including a plurality of analysis modules that are analyzable of different items in which the plurality of analysis modules are connected to each other with a transport module, there is provided an automatic analyzer that improves transport efficiency more than that of a conventional one and that can shorten time to completion of analysis. In a plurality of analysis modules 13, 14 and 15, two or more analysis modules 13 and 14 that analyze different analysis types form one group 16. A control module 10 sets a transport destination after a sample dispensing process is completed the two or more analysis modules 13 and 14 to the two or more analysis modules 13 and 14 as transport destinations when the two or more analysis modules 13 and 14 that are analyzable of an unmeasured analysis item in the one group 16, and the control module gives priority to the two or more analysis modules 13 and 14 over another analysis module 15.

## Description

### Technical Field

The present invention relates to an automatic analyzer to analyze a biological sample (hereinafter referred to as sample) such as blood and urine.

### Background Art

As an example of a sample processing system where dependency between a rack transport unit, which is responsible for supply, transport, and collection of a rack, and a processing unit, which is responsible for sample processing such as preprocessing and analysis, is eliminated and the units are thus made independent, allowing improvement in processing efficiency of the system as a whole and time shortening, PTL 1 describes a system configured such that a plurality of racks are placed on standby, each of processing units has a pair of buffer modules that can randomly access the respective racks, and a buffer unit loads/unloads the rack into/from a rack transport unit, where an unprocessed rack is loaded into the buffer unit, and when processing including an automatic reexamination has been completed, the rack is unloaded from the buffer unit.

### Citation List

### Patent Literature

PTL 1: Japanese Unexamined Patent Application Publication No. 2009-150859.

### Summary of Invention

### Technical Problem

In some automatic analyzer that performs quantitative or qualitative analysis of a specific component contained in a sample by using the sample and a reagent, a sample transport system transports a sample container containing a sample to an analysis module to perform sample analysis processing, or transports the sample container between a plurality of analysis modules.

As a technique for such sample transport, PTL 1 describes an automatic analyzer with three analysis modules arranged in sequence along a transport line, in which when dispensing of a sample has been completed in a first analysis module, the sample is then transported to a second analysis module with a smaller operating load.

An automatic analyzer used in a facility that requires testing of many samples can improve throughput by connecting a plurality of analysis modules together, for example. To keep a certain throughput of such an automatic analyzer, samples must be transported efficiently to the respective analysis modules.

According to the description of the automatic analyzer of PTL 1, throughput of the analyzer as a whole can be prevented from being reduced. However, it has become clear that the method described in PTL 1 may cause inefficient sample transport and thus has room for improvement.

The method for determining a sample transport destination in the method of PTL 1 is described below.

A control module determines a transport destination from an analysis item of a sample and a load value of an analysis module. The analysis item indicates an item that can be measured by the analysis module. The load value of the analysis module includes not only the number of items that have to be processed by each analysis module, but also time taken for dispensing in each analysis module, for example, time taken for each analysis module to complete a task assigned thereto, i.e., time calculated by multiplying the number of processing items by time required for dispensing.

For the automatic analyzer disclosed in PTL 1, when a certain analysis module completes dispensing of a sample and a remaining analysis item can be measured by a different analysis module, the sample is transported to an analysis module with a smaller load value and different from an analysis module that has most recently completed dispensing. Through investigations of the inventors, it is revealed that such transport lengthens a transport route, causing a reduction in efficiency of sample transport.

The invention provides an automatic analyzer including a plurality of analysis modules with different analyzable items and connected to each other with a transport module, in which it is possible to improve transport efficiency more than that of a conventional one, and shorten time to completion of analysis.

### Solution to Problem

The invention includes a plurality of the solutions to the above-described problem. An exemplary solution is an automatic analyzer including three or more analysis modules to measure a sample, a transport line to transport a sample to the analysis modules, and a control unit to control the transport line, where the analysis modules include two or more analysis modules to analyze the same analysis type and an analysis module to analyze a different analysis type, two or more analysis modules analyzing different analysis types in the plurality of analysis modules form one group, and after a sample dispensing process is completed in a first module, when a second module, which can analyze an unmeasured analysis item, exists in the same group as the first module, the control unit sets the second module as a transport destination, and gives priority to the second module over a third module being another module.

### Advantageous Effects of Invention

According to the invention, it is possible to improve transport efficiency more than that of a conventional one and shorten time to completion of analysis. Other problems, configurations, and effects are more clarified by the following description of embodiments.

### Brief Description of Drawings

FIG. 1 is a schematic block diagram showing an example of an automatic analyzer according to a first embodiment of the present invention;
FIG. 2 is a diagram showing examples of load values of analysis modules in the automatic analyzer according to the first embodiment;
FIG. 3 is a flowchart showing an overview of sample transport logics in the automatic analyzer according to the first embodiment;
FIG. 4 is a flowchart corresponding to a process A in Fig. 3;
FIG. 5 is a schematic block diagram showing an example of an automatic analyzer according to a second embodiment of the present invention;
FIG. 6 is a diagram showing the detail of a buffer module in Fig. 5;
FIG. 7 is a diagram showing examples of load values of analysis modules in the automatic analyzer according to the second embodiment;
FIG. 8 is a flowchart showing an overview of sample transport logics in the automatic analyzer according to the second embodiment;
FIG. 9 is a flowchart corresponding to a process B in Fig. 8;
FIG. 10 is a diagram showing examples of load values of analysis modules in an automatic analyzer according to a third embodiment of the present invention;
FIG. 11 is a diagram showing analysis items of analysis modules in the automatic analyzer according to the third embodiment;
FIG. 12 is a flowchart showing an overview of sample transport logics in the automatic analyzer according to the third embodiment;
FIG. 13 is a flowchart corresponding to a process C in Fig. 12;
FIG. 14 is a diagram showing electrode states of analysis modules in an automatic analyzer according to a fourth embodiment of the present invention;
FIG. 15 is a flowchart showing an overview of sample transport logics in the automatic analyzer according to the fourth embodiment;
FIG. 16 is a flowchart corresponding to a process D in Fig. 15;
FIG. 17 is a flowchart showing an overview of sample transport logics in an automatic analyzer according to a fifth embodiment of the present invention; and
FIG. 18 is a flowchart corresponding to a process E in Fig. 17.

### Description of Embodiments

Some embodiments of an automatic analyzer of the invention will be described below with reference to the drawings.

In the drawings used herein, the same or corresponding components are designated by the same or similar reference numerals or signs, and duplicated description of such components may be omitted.

The content of the device configuration and processing operations described later is exemplary content to explain the invention, and the invention encompasses an invention that combines a device configuration or processing operation described later with a known technique, or an invention that replaces part of the device configuration or processing operation described later with a known technique.

### First Embodiment

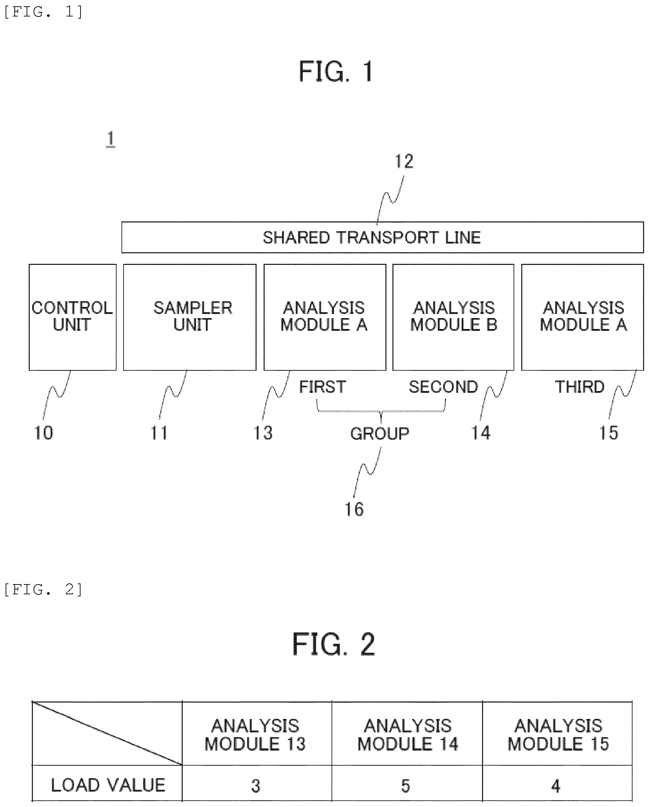

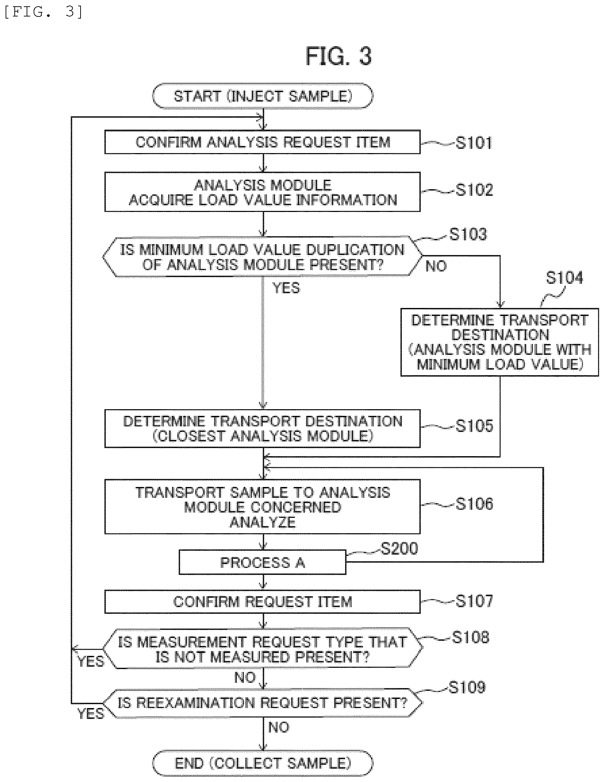

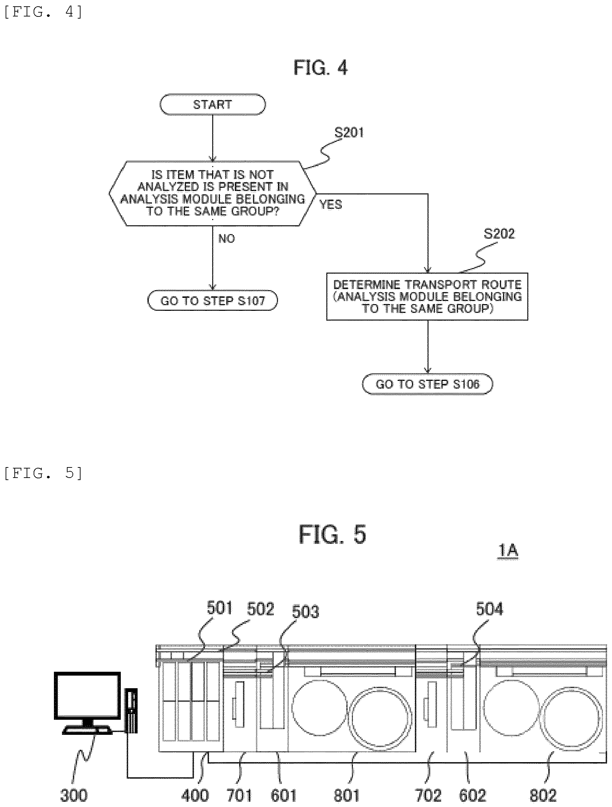

A first embodiment of the automatic analyzer of the invention is now described with reference to Figs. 1 to 4. Fig. 1 is a schematic block diagram illustrating an example of an automatic analyzer according to the first embodiment, Fig. 2 illustrates exemplary load values of respective analysis modules, Fig. 3 is a flowchart illustrating an overview of sample transport logics, and Fig. 4 is a flowchart corresponding to process A in Fig. 3.

An overall configuration of the automatic analyzer is now described with reference to Fig. 1.

The automatic analyzer 1 of Fig. 1 includes a control module 10, a sampler module 11, a shared transport line 12, and three or more analysis modules 13, 14, and 15.

The sampler module 11 is a module for input and storage of a sample, and is a part that inputs, into the automatic analyzer 1, a sample holder with one sample container containing a sample to be analyzed in the analysis modules 13, 14 and 15 or a sample rack with a plurality of sample containers, and that takes, out of the automatic analyzer 1, the sample holder/sample rack with the sample container/containers containing a sample/samples that has/have been analyzed in the analysis module/modules 13, 14 or/and 15.

In addition to or separately from the sampler module 11, the automatic analyzer 1 can further include a preprocessing module or a postprocessing module performing various types of preprocessing or postprocessing on the sample.

The shared transport line 12 is a device used to transport the sample container from the sampler module 11 to each of the analysis modules 13, 14, and 15, and includes any component that can transport the sample container, for example, but not limited to, a transport belt and a motor.

The analysis modules 13, 14 and 15 are arranged along the shared conveyor line 12 and each measure the sample.

The analysis modules 13, 14, and 15 include two or more analysis modules 13, 15 that analyze the same analysis type for the sample, and the analysis module 14 that analyzes a different analysis type.

In the first embodiment, among the analysis modules 13, 14 and 15, two or more analysis modules 13 and 14, which analyze different analysis types, are assumed to configure one group 16.

The analysis type refers to a type that can be analyzed by the automatic analyzer 1, for example, biochemistry, immunology, and electrolytes. Each analysis type is accompanied with an analysis item. Examples of the analysis item include proteins for biochemistry, tumor markers for immunity, and Na (sodium), K (potassium), and Cl (chromium) for electrolytes.

In Fig. 1, measurable analysis types are indicated by alphabetical characters. For example, the analysis module that can measure an analysis type A is represented as analysis module A, and the analysis modules 13 and 15 can measure the analysis type A, while the analysis module 14 can measure an analysis type B.

Although Fig. 1 illustrates a case where the analysis module 15 analyzes the same analysis type as the analysis module 13, the analysis module 15 may be a module that measures the analysis type B like the analysis module 14.

The control module 10 is a part responsible for controlling information of the entire the automatic analyzer 1, such as the shared transport line 12 and the analysis modules 13, 14, and 15. The control module 10 is connected to the shared transport line 12 and the analysis modules 13, 14 and 15 by wired or wireless network lines.

In the first embodiment, the control module 10 performs control to, after a sample dispensing process is completed in a certain analysis module 13 or 14, set a transport destination to an analysis module 13 or 14 capable of analyzing an unmeasured analysis item if such an analysis module 13 or 14 exists in the same group 16 as the corresponding analysis modules 13 and 14, and to give priority to that analysis module 13 or 14 over the analysis module 15 being another module.

Further, if there is no analysis module capable of analyzing an unmeasured analysis item in the same group 16, the control module 10 performs control to set an analysis module with the minimum load value as the subsequent transport destination. Such control is described in detail later.

Such a control module 10 may be implemented using a general-purpose computer or implemented as a function of a program executed on the computer. That is, processing of the control module 10 may be implemented by storing the processing in a form of program codes in a recording unit such as a memory and executing the program codes by a processor such as CPU. The control module 10 may be configured by hardware such as a dedicated circuit board.

This is an overview of the overall configuration of the automatic analyzer 1.

As a precondition of the following description, it is assumed that the analysis types of the sample are A and B, each analysis item can be analyzed through one transport to the analysis module, and no reexamination request is generated.

The reexamination request is issued when an analysis item cannot be analyzed normally due to occurrence of an unforeseen event (such as running out of reagents used for analysis, and equipment failure). When receiving the reexamination request, the control module 10 transports the sample again to the corresponding analysis module 13, 14, or 15 for another analysis.

Fig. 2 illustrates load values of the respective analysis modules set as a precondition for the first embodiment, and shows an example of the load values of the analysis modules. For illustrative purposes, the load values are expressed as numbers from 1 to 10, with higher numbers representing higher loads. The load value shown in Fig. 2 is a parameter determined by, for example, how many analysis requests are lined up at that timing, and is a value that changes from moment to moment according to an operating state of the analyzer.

Transport control by the control module 10 in the first embodiment is now described in detail with reference to Figs. 3 and 4.

Fig. 3 illustrates a flowchart showing a method for determining a sample transport route from input of a sample from the sampler module 11 to collection of the sample.

As a precondition, when the sample is input into the sampler module 11 and unloaded from the shared transport line 12, a barcode attached to the sample is read, and the information is transmitted to the control module 10.

As shown in Fig. 3, the control module 10 first checks a request type (step S101) and acquires load values (see Fig. 2) from the respective analysis modules 13, 14 and 15 at that time (step S102).

Subsequently, the control module 10 derives the minimum load value from the load values of the analysis modules 13, 14 and 15, and checks whether there is duplication of the minimum load value (step S103). If it is determined that there is no duplication of the minimum load value in the plurality of analysis modules, the concerned analysis module is set as the transport destination (step S104). In contrast, if it is determined that there is duplication of the minimum load value in the analysis modules, an analysis module, which is closest to the current position of the sample in the analysis modules with the minimum load value, is set as the transport destination (step S105).

Subsequently, the control module 10 transports the sample to the concerned analysis module (step S106). In the first embodiment, the sample is transported to the analysis module 13 via the shared transport line 12 according to steps S103, S105 and S107.

Subsequently, the control module 10 executes process A to determine a subsequent transport destination for the sample dispensing of which has been completed in the analysis module 13 (step S200).

Fig. 4 illustrates a flowchart of the process A.

As illustrated in Fig. 4, the control module 10 first checks whether there is an unanalyzed item in the analysis modules belonging to the same group (step S201). If it is determined that there is no unanalyzed item, the process proceeds to step S107. In contrast, if it is determined that there is an unanalyzed item, the transport destination of the sample is set to an analysis module having the unanalyzed item belonging to the same group (step S202).

In the first embodiment, the sample is transported to the analysis module 14 via the shared transport line 12 according to steps S202 and S203.

Returning to Fig. 3, after that, if the result of the determination in step S201 is determined to be "NO", or if the transport in step S106 is completed, the control module 10 checks whether there is an unanalyzed analysis item (step S107). If it is determined that there is an unmeasured analysis item, the control module 10 re-executes the processing from step S101. In contrast, if it is determined that there is no unmeasured request type, the control module 10 checks whether there is a reexamination request (step S109).

If it is determined that there is a reexamination request, the control module re-executes the processing from step S101. If it is determined that there is no reexamination request, the control module 10 sets the transport destination to the sampler module 11, and the sample is collected.

In the first embodiment, since the determination results in steps S108 and S109 are each "NO", the sample is transported to the sampler module 11 via the shared transport line 12 and collected.

Advantageous effects of the first embodiment are now described.

The automatic analyzer 1 of the first embodiment of the invention includes the three or more analysis modules 13, 14, and 15 to measure the sample, the shared transport line 12 to transport the sample to any of the analysis modules 13, 14, and 15, and the control module 10 to control the shared transport line 12, where the analysis modules 13, 14, and 15 include two or more analysis modules 13 and 15 to analyze the same analysis type and an analysis module 14 to analyze a different analysis type, two or more analysis modules 13 and 14 analyzing different analysis types in the analysis modules 13, 14, and 15 form one group 16, and after a sample dispensing process is completed in the analysis module 13 or 14, when an analysis module 13 or 14 that can analyze an unmeasured analysis item exists in the same group 16 as the analysis modules 13 and 14, the control module 10 sets a transport destination to that analysis module 13 or 14, and gives priority to the analysis module 13 or 14 over the analysis module 15 being another module.

Before determining the transport destination using the load values of the analysis modules 13, 14, and 15, whether the sample can be transported to any of the analysis modules 13 and 14 configuring one group 16 is first determined, thereby the number of conditions where the transport route can be shortened can be increased compared to a case where the transport destination is determined depending on the load value as in the past. Transport efficiency of the automatic analyzer 1 as a whole therefore can be improved more than that of a conventional one, and time required to complete the analysis can be shortened.

If there is no analysis module 13, 14, or 15 capable of analyzing an unmeasured analysis item in the same group, since the control module 10 sets the analysis module 13, 14, or 15 with the minimum load value to the subsequent destination, time to complete the analysis can be securely shortened.

Furthermore, the analysis module 13 and the analysis module 15 are analysis modules that analyze the same analysis type, which makes it possible to minimize the possibility that the sample is transported to the analysis module 15 that do not configure one group 16 when there are a plurality of modules of the same analysis type, and thus transport efficiency can be securely improved.

### Second Embodiment

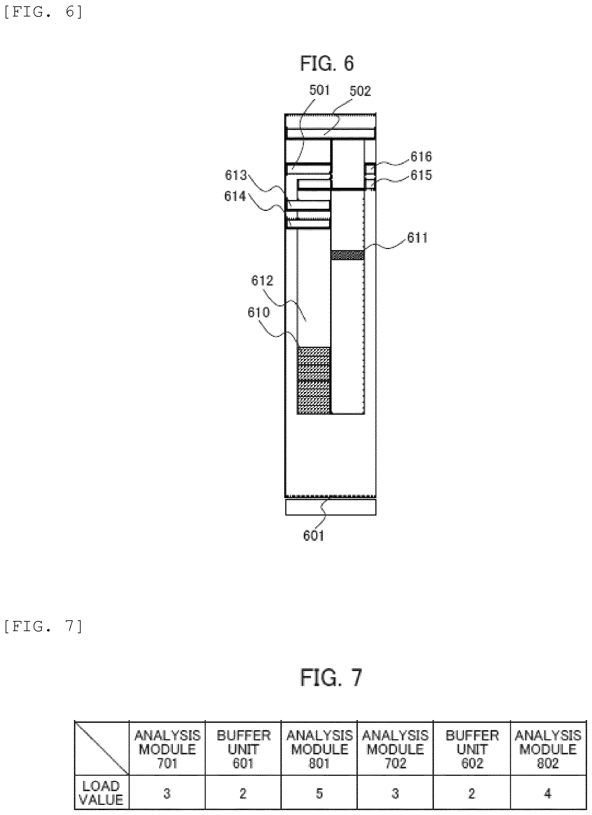

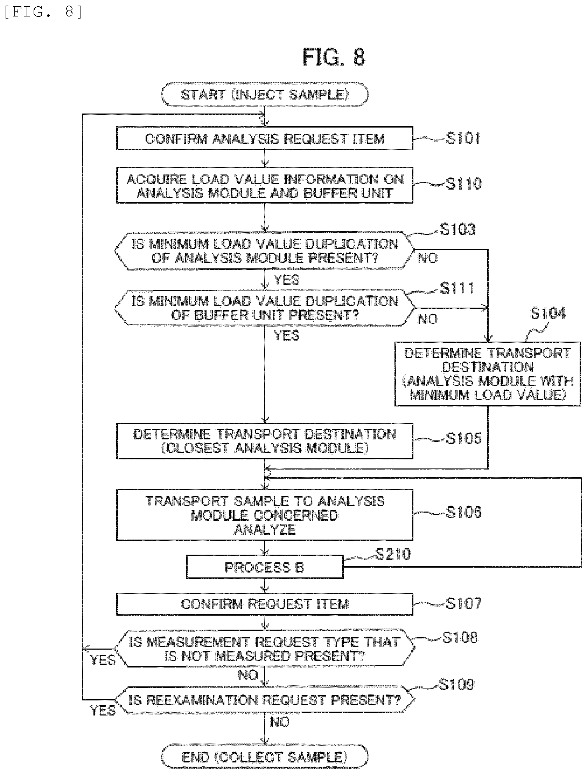

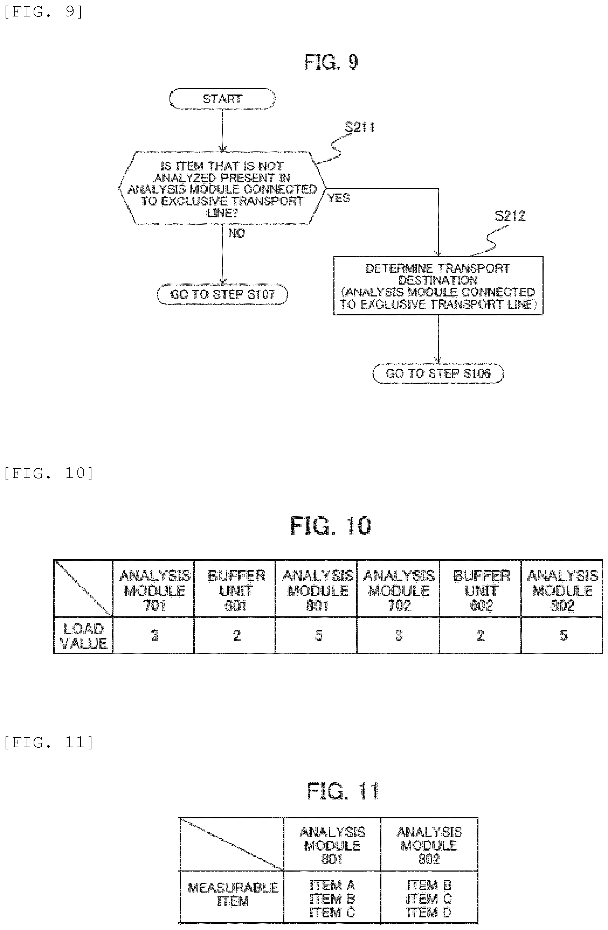

A second embodiment of the automatic analyzer of the invention is now described with reference to Figs. 5 to 9. Fig. 5 is a schematic block diagram illustrating an example of the automatic analyzer according to the second embodiment, Fig. 6 illustrates details of a buffer module in Fig. 5, Fig. 7 illustrates exemplary load values of respective analysis modules, Fig. 8 is a flowchart illustrating an overview of sample transport logics, and Fig. 9 is a flowchart corresponding to process B in Fig. 8.

The automatic analyzer 1A of the second embodiment shown in Fig. 5 includes a control module 300 that controls the automatic analyzer 1A, a sampler module 400 that inputs and stores a sample, a transport line, buffer modules 601 and 602, and analysis modules 701, 702, 801 and 802.

In such a configuration, the control module 300 and the sampler module 400 are substantially the same in configuration and operation as the control module 10 and the sampler module 11, respectively, of the automatic analyzer 1 of the first embodiment.

The transport line includes a shared transport line and exclusive transport lines 503, 504 used to transport the sample from the sampler module 400 to each of the analysis modules 701, 702, 801, and 802.

Of the transport lines, the shared transport line is to transport the sample in common to the three or more analysis modules 701, 702, 801, and 802, and includes a go line 501 to transport the sample in a direction away from the sampler module 400 and a return line 502 to transport the sample in a direction closer to the sampler module 400.

On the other hand, the exclusive transport lines 503 and 504 are each to transport the sample between the analysis modules 701 and 801 in one group or between the analysis modules 702 and 802 without via the go line 501 or the return line 502, and are each disposed along such modules independently from the go line 501 and the return line 502.

The buffer module 601 has the exclusive transport line 503 used for transporting a sample between the specific analysis modules 701 and 801, and is a part that allows a sample rack to temporarily stand by. Similarly, the buffer module 602 has the exclusive transport line 504 used for transporting a sample between the specific analysis modules 702 and 802, and is a part that allows a sample rack to temporarily stand by.

The analysis modules 701 and 702 are of the same type, e.g., are each a module that measures an electrolyte item alone. The analysis modules 801 and 802 are also of the same type, e.g., are each a module that measures alone an electrolyte item different from that for the analysis module 701 or 702.

The analysis modules 701 and 801 are connected by the buffer module 601 and form one group. Similarly, the analysis module 702 and the analysis module 802 are connected by the buffer module 602 and form one group.

Fig. 6 shows details of the buffer module 601 having the exclusive transport line. Details of the buffer module 602 are basically the same as those of the buffer module 601, and thus detailed description is omitted.

As shown in Fig. 6, the buffer module 601 is a part that holds one or more sample racks 610 to hold a plurality of sample containers each containing a sample. A sample holder that holds one sample container can be used instead of the sample rack 610.

The buffer module 601 has an arm 611, a buffer 612, load lines 613 and 615, and unload lines 614 and 616.

The arm 611 is a mechanism used for load and unload of the sample between the go line 501 or the return line 502 and the buffer module 601.

The buffer 612 is a mechanism for storing a plurality of sample racks 610.

The load line 613 and the unload line 614 are mechanisms for load and unload of the sample rack 610 stored in the buffer module 602 to/from the analysis module 701. Similarly, the load line 615 and the unload line 616 are mechanisms for load and unload of the sample rack 610 stored in buffer module 602 to/from the analysis module 801. The exclusive transport line 503 is configured of a combination of the load lines 613 and 615 and the unload lines 614 and 616.

A method for transporting a sample from the analysis module 701 to the analysis module 801 is now described. The sample rack 610 with the sample container containing a sample, dispensing of which has been completed in the analysis module 701, is loaded into the buffer module 601 via the unload line 614. After that, the arm 611 grabs the sample rack 610 and stores the sample rack 610 in the buffer 612.

When the analysis module 801 is a subsequent transport destination according to an instruction from the control module 300, the arm 611 grabs the sample rack 610 with the sample container containing a target sample and transports the sample rack 610 to the analysis module 801 via the load line 615.

As described above, the control module 300 in the second embodiment allows the sample to be transported via the exclusive transport line 503 without via the go line 501 or the return line 502 when the sample is transported between the analysis modules 701 and 801, and also allows the sample to be transported via the exclusive transport line 504 without via the go line 501 or the return line 502 when the sample is transported between the analysis modules 702 and 802.

The buffer modules 601 and 602 each transmit load value information as shown in Fig. 7 to the control module 300 at the timing when the sample is unloaded from the analysis module 701, 702, 801, or 802 to the buffer module 601 or 602, or when the sample is loaded into the buffer module 601 or 602 from the shared transport line.

The transport control in the automatic analyzer 1A of the second embodiment is now described in detail with reference to Figs. 7 to 9.

As a precondition for the second embodiment, the analysis modules 701 and 702 in Fig. 5 are each an ISE module that measures an electrolyte item, the analysis modules 801 and 802 are each a biochemical analysis module, an analysis type of the sample is ISE or biochemistry, and the analysis item can be analyzed through one transport to the analysis module, and no reexamination request is generated.

Fig. 7 shows load values of the respective analysis modules and buffer modules, set as a precondition for the second embodiment. The load value of the buffer module is calculated from the number of samples stored in a buffer, for example. The load value increases with the number of the sample to be stored.

Fig. 8 is a flowchart corresponding to addition of the buffer modules 601 and 602 having the exclusive transport lines.

Specifically, step S102 shown in Fig. 3 is changed to step S110, and step Sill is newly added between step S103 and step S105. Furthermore, step S200 is changed to step S210.

Details are described below based on the flowchart of Fig. 8.

First, the control module 300 checks the analysis type by receiving information from the sampler module 400 when the sample, which has been input into the sampler module 400, is unloaded from the go line 501 (step S101), and acquires the load values from the respective analysis modules 701, 702, 801, and 802 and buffer modules 601 and 602 (step S110) .

Subsequently, the control module 300 derives the minimum load value from the load values of the analysis modules 701, 702, 801, and 802 and checks whether there is duplication of the minimum load value (step S103). If it is determined that there is no duplication of the minimum load value in the plurality of analysis modules 701, 702, 801, and 802, the concerned analysis module is set as a transport destination (step S104) .

In contrast, if it is determined that there is duplication of the minimum load value in the analysis modules, the minimum load value is derived from the load values of the respective buffer modules 601 and 602, and it is checked whether there is duplication of the minimum load value (step 5111). If it is determined that there is no duplication of the minimum load value in the plurality of buffer modules, an analysis module, having the minimum load value, to be connected to the concerned buffer module is set as the transport destination (step S104). In contrast, if it is determined that there is duplication of the minimum load value in the buffer modules, the analysis module closest to the current sample position among the analysis modules with the minimum load value is set as the transport destination (step S105).

After that, the control module 10 transports the sample to the concerned analysis module (step S106). In the second embodiment, the sample is transported via the go line 501 to the ISE analysis module 701 according to steps S103, S111 and S105.

When the sample, dispensing of which has been completed, is loaded into the buffer module 601, the control module 300 then executes the process B (step S210).

Fig. 9 is a flowchart illustrating details of the process B (step S210), in which notation of the flowchart of the process A of Fig. 4 is changed to notation with the exclusive transport line.

First, as shown in Fig. 9, it is checked whether there is an unanalyzed item in the analysis modules connected by the exclusive transport lines 503 and 504 (step S211). If it is determined that there is no unanalyzed item therein, step S107 is executed. If it is determined that there is an analysis module of the unmeasured type, the sample destination is set to an analysis module with an unanalyzed item to be connected to the exclusive transport line (step S212). In the second embodiment, the transport destination of the sample is the (biochemical) analysis module 801 according to steps S211 and S212.

In the case of a sample, the transport destination of which has been determined in step S212, the control module 300 transports the sample to the concerned analysis module regardless of the load value of the analysis module (step S106). In the second embodiment, the sample is transported via the exclusive transport line 503 to the (biochemical) analysis module 801 according to step S106.

If the result of determination in step S211 is "NO", or after the transport is completed in step S106, the control module 300 checks for an unmeasured analysis item (step S107), and checks whether there is an unmeasured analysis item (step S108). If it is determined that there is an unmeasured analysis type, the control module 300 re-executes the processing from step S101. If it is determined that there is no unmeasured analysis type, the control module 300 checks whether there is a reexamination request (step S109).

If it is determined that there is a reexamination request, the control module re-executes the processing from step S101.
If it is determined that there is no reexamination request, the control module 300 sets the transport destination to the sampler module 400, and transports the sample to the sampler module 400, and the sample is collected.

In the second embodiment, since the determination result in each of steps S108 and S109 is "NO", the sample is transported to the sampler module 400 via the return line 502 and collected.

Other configurations and operations are substantially the same as those of the automatic analyzer of the first embodiment, and detailed description is omitted.

The automatic analyzer of the second embodiment of the invention provides substantially the same effects as those of the automatic analyzer of the first embodiment.

The transport lines include the go line 501 and the return line 502 to transport a sample in common to the three or more analysis modules 701, 702, 801, and 802, and the exclusive transport lines 503 and 504 to transport a sample between the analysis modules 701, 702, 801, and 802 in one group. When a sample is transported between the analysis modules 701 and 801 or between the analysis modules 702 and 802, the control module 300 allows the sample to be transported via the exclusive transport line 503 or 504 without via the go line 501 or return line 502, making it possible to decrease a load on the shared go line 501 or return line 502 than in the past. This means that another sample can be transported in many cases, further improving transport efficiency of the sample.

Furthermore, the exclusive transport lines 503 and 504 are disposed between the analysis modules 701, 702, 801 and 802 in one group, making it possible to minimize an installation distance of each of the exclusive transport lines 503 and 504 and further improve transport efficiency.

Since the analysis modules 701 and 702 are analysis modules that each measure an electrolyte item alone, it is possible to prevent a sample from simply being transported to an analysis module with a lighter load in analysis modules for electrolytes, two or more of which have not been disposed in one analyzer in the past, and thus improve transport efficiency.

Although the second embodiment has been described with the case where the analysis modules 701 and 801 or the analysis modules 702 and 802, configuring one group, are adjacently disposed with the buffer module 601 or 602 therebetween, the analysis modules 701 and 801 or the analysis modules 702 and 802, configuring one group, may not be adjacently disposed with the buffer module 601 or 602 therebetween.

Although the case where the exclusive transport lines 503 and 504 and the buffer modules 601 and 602 are provided has been described, the exclusive transport lines 503 and 504 and the buffer modules 601 and 602 may be omitted.

### Third Embodiment

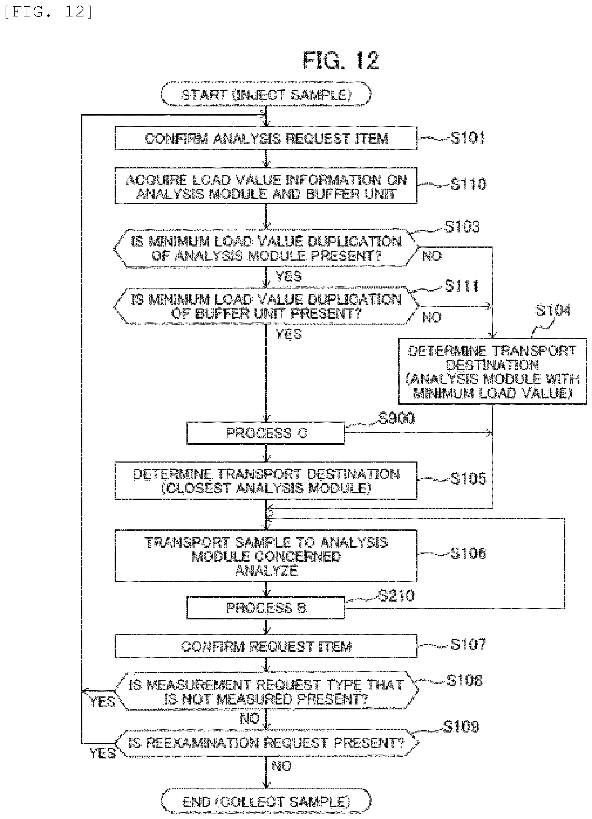

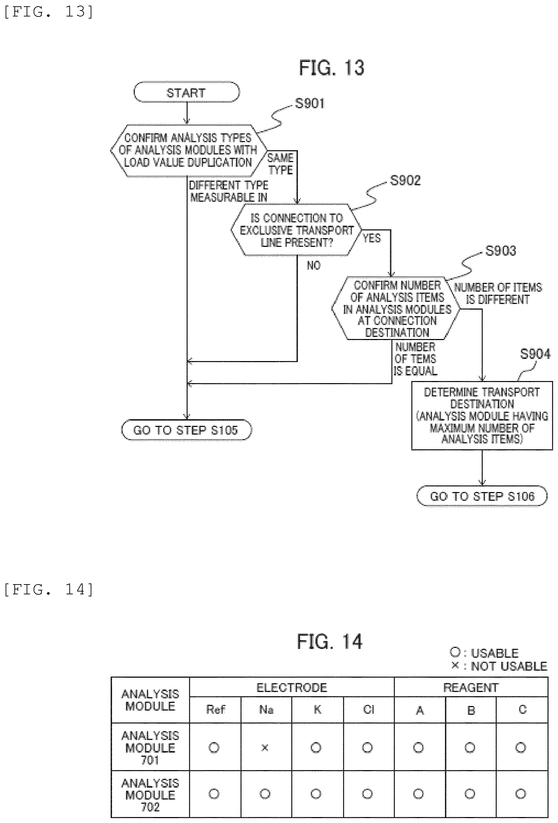

A third embodiment of the automatic analyzer of the invention is now described with reference to Figs. 10 to 13. Fig. 10 illustrates exemplary load values of respective analysis modules in the automatic analyzer according to the third embodiment, Fig. 11 illustrates analysis items of the analysis modules, Fig. 12 is a flowchart illustrating an overview of sample transport logics, and Fig. 13 is a flowchart corresponding to process C in Fig. 12.

The configuration and operation of the automatic analyzer of the third embodiment are the same as those of the automatic analyzer 1A of the second embodiment except that transport control by the control module 300 is partially changed from that of the automatic analyzer 1A of the second embodiment.

When the analysis modules 701, 702, 801, and 802 as transport destination candidates have the same load value, the control module 300 of the third embodiment performs control to set a transport destination to a group being most capable of analyzing therein a remaining analysis item in the requested analysis items.

Fig. 10 illustrates load values of analysis modules set as a precondition for the third embodiment. Fig. 11 illustrates analysis items, which can be analyzed by the (biochemical) analysis modules 801 and 802, set as a precondition for the third embodiment.

Fig. 12 illustrates location of additional processing according to the third embodiment in the flowchart (Fig. 9) shown in the second embodiment. As a precondition, it is assumed that the analysis types of the sample are ISE and the biochemical type, analysis items of the biochemical type of the sample correspond to items C and D, and no reexamination request is made.

In the flow shown in Fig. 12, processing is the same as that of the flow shown in Fig. 8 except that S900 is added after step S111.

After a sample is input, as shown in Fig. 12, the control module 300 executes steps S103 and Sill. Since load values of the (ISE) analysis modules 701 and 702 with the minimum load value duplicate in step S103, and load values of the buffer modules 601 and 602 with the minimum load value also duplicate in step S111, the control module 300 executes the process C (step S900) .

Fig. 13 shows a flowchart illustrating details of the process C (step S900) .

First, as shown in Fig. 13, the control module 300 checks whether analysis modules, the load values of which duplicate, have the same analysis type (step S901). If it is determined that the analysis modules have different analysis types, step S105 is executed. In contrast, if it is determined that the analysis modules have the same analysis type, it is checked whether the analysis modules are each connected to an exclusive transport line (step S902) .

In the third embodiment, since the analysis types of the analysis modules 701 and 702, the load values of which duplicate, are each ISE type, step S902 is executed.

If it is determined in step S902 that there is no connection to the exclusive transport line, step S105 is executed. If it is determined that there is a connection to the exclusive transport line, the number of analyzable analysis items is compared between concerned analysis modules in a group to which the analysis modules belong (step S903).

If it is determined in step S903 that the number of analysis items is the same between the analysis modules as connection destinations, step S106 is executed. In contrast, if it is determined that the number of analysis items is different between the destination analysis modules, the transport destination is an analysis module having the maximum number of analysis items in the group (step S904).

In the third embodiment, since the (ISE) analysis modules 701 and 702 are connected to the exclusive transport lines 503 and 504, respectively, step S903 is executed.

The analysis modules as connection destinations of the exclusive transport lines are the (biochemical) analysis modules 801 and 802. Since the number of analyzable analysis items is one (item C) for the (biochemical) analysis module 801 and two (items C and D) for the (biochemical) analysis module 802, the transport destination is the (ISE) analysis module 702, between the analysis modules 701 and 702, as the connection destination of the exclusive transport line 503 of the (biochemical) analysis module 802 having the maximum number of analysis items.

The automatic analyzer of the third embodiment of the invention provides substantially the same effects as those of the automatic analyzer of the first embodiment.

If the analysis modules 701, 702, 801, and 802 as candidates for the transport destination have the same load value, a group, which is most capable of analyzing a remaining analysis item among the requested analysis items, is set as the transport destination, thereby analysis can be conducted without duplication of any analysis item unlike the case where such additional processing is not considered, making it possible to decrease the number of times of sample transport in the (biochemical) analysis modules 801 and 802 and further shorten the transport route.

### Fourth Embodiment

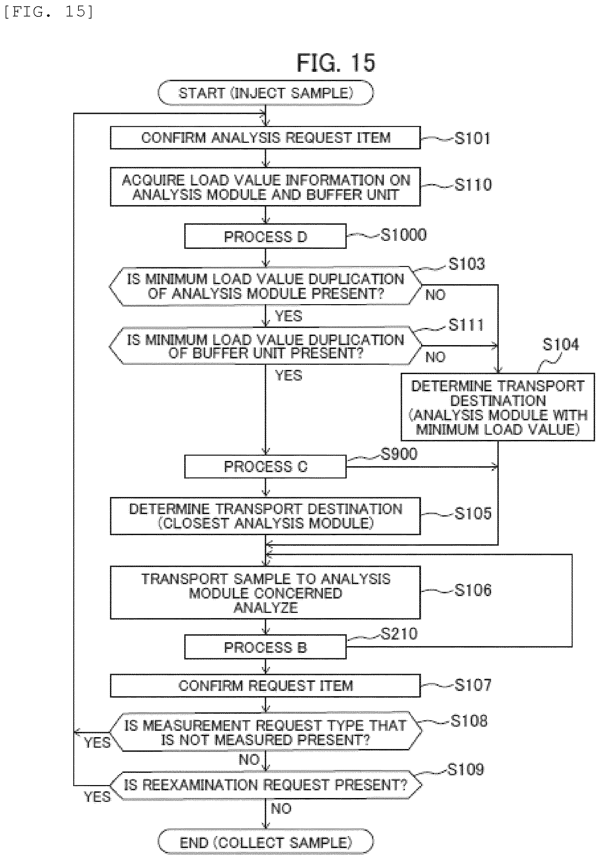

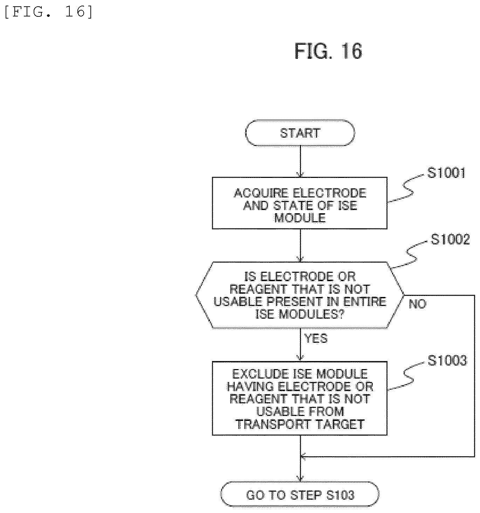

An automatic analyzer of a fourth embodiment of the invention is now described with reference to Figs. 14 to 16. FIG. 14 illustrates electrode states of analysis modules in the automatic analyzer according to the fourth embodiment, FIG. 15 is a flowchart illustrating an overview of sample transport logics, and FIG. 16 is a flowchart corresponding to process D in Fig. 15.

The configuration of the automatic analyzer of the fourth embodiment is the same as that of the automatic analyzer of the third embodiment except that transport control by the control module 300 is partially changed from that of the automatic analyzer of the third embodiment.

When a specific analysis type is the electrolyte item, the control module 300 of the fourth embodiment performs control to exclude the analysis modules 701 and 702, which each have even one unmeasurable item among electrolyte items, from the transport destination.

The ISE module uses four types of electrodes, i.e., a reference electrode (Ref), a Na electrode sensitive to sodium (Na) ions, a K electrode sensitive to potassium (K) ions, and a Cl electrode sensitive to chlorine (Cl) ions, and three reagents (in this case, reagents A, B, and C) to measure a potential difference between the reference electrode and each electrode, and thus can measure concentrations of Na, K and Cl in a sample.

The electrodes and the reagents are consumables and become unusable after repeated use. An electrode and reagent condition mentioned in the fourth embodiment refers to availability of the electrode or the reagent.

A precondition for the fourth embodiment is that the analysis type of the sample is the ISE type and no reexamination request is generated. Fig. 14 shows the electrode and reagent condition for each ISE module set as the precondition for the fourth embodiment.

In the flow shown in Fig. 15, processing is the same as that of the flow shown in Fig. 12 except that step S1000 is added after step S110.

Upon input of a sample, the control module 300 successively performs steps S101 and S110, and then performs process D (step S1000).

Fig. 16 illustrates a flowchart of the process D (step S1000).

First, as shown in Fig. 16, the control module 300 acquires an electrode and reagent condition of the ISE module (step S1001), and then checks whether an unusable electrode or reagent is held in each of the ISE modules (step S1002). If it is determined that no unusable electrode or reagent is held, the process proceeds to step S103. If it is determined that the unusable electrode or reagent is held, the ISE module having the unusable electrode is excluded from the transport destination (Step S1003), and then the process proceeds to step S103.

In the fourth embodiment, since the Na electrode of the (ISE) analysis module 701 is unusable, the (ISE) analysis module 701 is excluded from the transport destination.

The automatic analyzer of the fourth embodiment of the invention provides substantially the same effects as those of the automatic analyzer of the first embodiment.

When the specific analysis type is the electrolyte item, the analysis module 701 or 702 having even one unmeasurable item among the electrolyte items is excluded from the transport destination, thereby transport from one ISE module to another ISE module can be prevented, making it possible to minimize the number of times of transport to the ISE module, and further improve transport efficiency.

The control of the fourth embodiment can be applied not only to the automatic analyzer of the third embodiment, but also to the automatic analyzer 1 of the first embodiment and the automatic analyzer 1A of the second embodiment.

### Fifth Embodiment

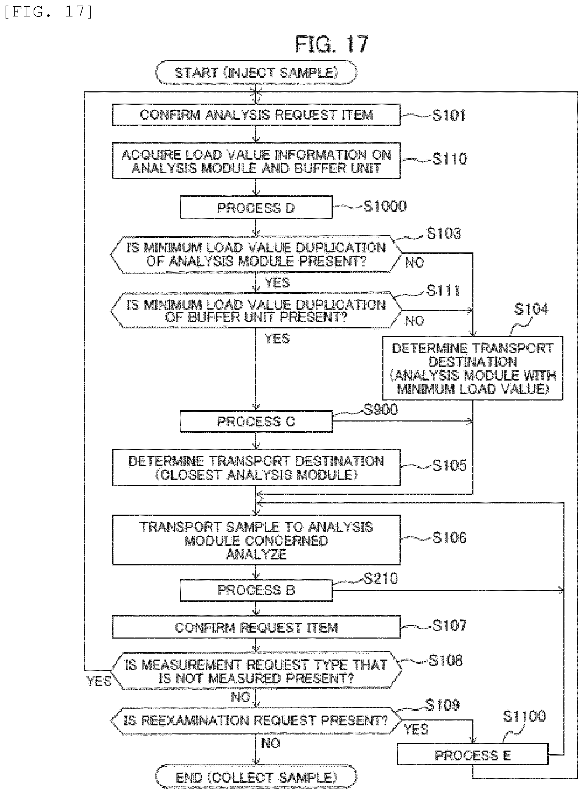

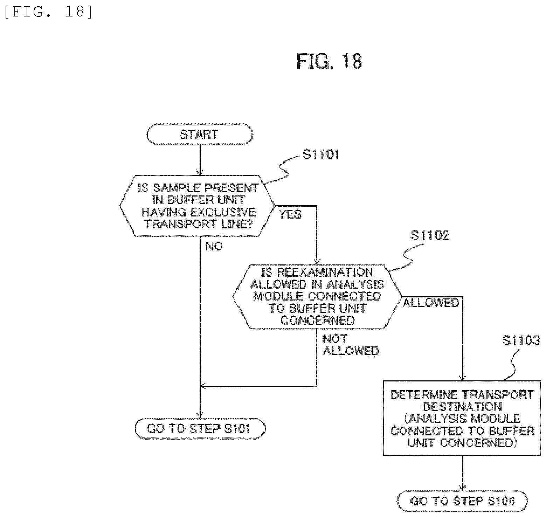

An automatic analyzer of a fifth embodiment of the invention is now described with reference to Figs. 17 and 18. FIG. 17 is a flowchart illustrating an overview of sample transport logics in the automatic analyzer according to the fifth embodiment, and FIG. 18 is a flowchart corresponding to process E in Fig. 17.

The configuration of the automatic analyzer of the fifth embodiment is the same as that of the automatic analyzer of the fourth embodiment except that transport control by the control module 300 is partially changed from that of the automatic analyzer of the fourth embodiment.

When a reexamination request is issued for a sample in the buffer module 601 or 602 within the analysis modules 701, 702, 801 and 802 configuring one group, the control module 300 in the fifth embodiment performs control to transport the sample to the analysis module 701, 702, 801, or 802 to be connected to the concerned buffer module 601 or 602.

As a precondition for the fifth embodiment, an analysis type of the sample is a biochemical type and a reexamination request for the biochemical type is generated.

In the flow shown in Fig. 17, processing is the same as that of the flow shown in Fig. 15 except that step S1100 is added when a reexamination request is determined to be present in step S109.

The sample is input into the sampler module 400 and loaded into the buffer module 601 via the go line 501. After that, the sample is loaded into the (biochemical) analysis module 801 and dispensed therein, and then unloaded to the buffer module 601.

The control module 300 executes step S109, and then performs the process E (step S1100) because a reexamination request for the biochemical type has been generated in the fifth embodiment.

Fig. 18 illustrates a flowchart of the process E (step S1100).

First, it is checked whether there is a sample in the buffer module having the exclusive transport line (step S1101). If it is determined that there is no sample in the concerned buffer module, step S101 is executed. In contrast, if it is determined that there is a sample in the concerned buffer module, it is checked whether a reexamination can be conducted in an analysis module to be connected to the concerned buffer module (step S1102).

If it is determined that the reexamination cannot be conducted in the concerned analysis module due to reagent shortage or the like, step S101 is executed. If it is determined that the reexamination can be conducted in the concerned analysis module, the transport destination is an analysis module to be connected to the concerned buffer module (step S1103), and step S106 is executed.

In the fifth embodiment, since dispensing of the sample has been finished in the (biochemical) analysis module 801 and the sample is waiting in the buffer module 601 having the exclusive transport line, the control module 300 executes step S1102, and the transport destination is the (biochemical) analysis module 801.

The automatic analyzer of the fifth embodiment of the invention provides substantially the same effects as those of the automatic analyzer of the first embodiment.

When the buffer modules 601 and 602 are further included, and when a reexamination request is issued for the sample in the buffer module 601 or 602 within the analysis modules 701, 702, 801, and 802, configuring one group, the sample is transported to the analysis module 701, 702, 801, or 802 to be connected to the concerned buffer module 601 or 602, which causes a case where a transport route can be shortened when a reexamination request occurs, and thus improves efficiency of sample transport during the reexamination, and eventually can shorten time before a reexamination result is provided.

The control of the fifth embodiment can be applied not only to the automatic analyzer of the fourth embodiment, but also to the automatic analyzer 1 of the first embodiment, the automatic analyzer 1A of the second embodiment, and the automatic analyzer of the third embodiment.

### Others

The invention should not be limited to the above-described embodiments, and includes various modifications and alterations. The embodiments have been described in detail for easy understanding of the invention, and the invention is not necessarily limited to those having all the described configurations.

Part of a configuration of one embodiment can be substituted for a configuration of another embodiment, and a configuration of one embodiment can be added to a configuration of another embodiment. Furthermore, a configuration of one embodiment can be added to, eliminated from, or substituted for part of a configuration of another embodiment.

### Reference Signs List

1, 1A: automatic analyzer
10: control module
11: sampler module
12: shared transport line
13: analysis module (second module)
14: analysis module (first module)
15: analysis module (third module)
16: group
300: control module
400: sampler module
501: go line (shared transport line)
502: return line (shared transport line)
503, 504: exclusive transport line
601, 602: buffer module
610: sample rack or sample holder
611: arm
612: buffer
613, 615: load line
614, 616: unload line
701, 702: ISE module
801, 802: biochemical module

## Claims

1. An automatic analyzer comprising:
a plurality of analysis modules that are three or more analysis modules configured to measure a sample;
a transport line through which a sample to the plurality of analysis modules is transported; and
a control unit configured to control the transport line,
wherein: the plurality of analysis modules includes two or more analysis modules configured to analyze equal analysis types and includes an analysis module configured to analyze a different analysis type;
in the plurality of analysis modules, two or more analysis modules configured to analyze different analysis types form one group; and
the control unit sets a transport destination after a sample dispensing process is completed in a first module to a second module as a transport destination when the second module that is analyzable of an unmeasured analysis item is present in a group including the first module, and the control unit gives priority to the second module over a third module that is another module.

2. The automatic analyzer according to claim 1,
wherein when no analysis module that is analyzable of an unmeasured analysis item is present in one group, the control unit sets an analysis module having a smallest load value to a subsequent transport destination.

3. The automatic analyzer according to claim 1,
wherein the second module and the third module are analysis modules that analyze equal analysis types.

4. The automatic analyzer according to claim 3,
wherein the second module and third module is an analysis module that alone measures an electrolyte item.

5. The automatic analyzer according to claim 1,
wherein the transport line includes
a shared transport line through which he sample is transported in a shared manner in the three or more analysis modules, and
an exclusive transport line through which the sample is transported between analysis modules in the one group; and
in transporting the sample from the first module to the second module, the control unit transports the sample through the exclusive transport line, not through the shared transport line.

6. The automatic analyzer according to claim 5,
wherein the exclusive transport line is placed between analysis modules in the one group.

7. The automatic analyzer according to claim 1,
wherein when load values are equal in the analysis modules that are transport target destination candidates, a group that is most analyzable of a remaining analysis item in requested analysis items in the group is set to a transport destination.

8. The automatic analyzer according to claim 1,
wherein when a specific analysis type is an electrolyte item, an analysis module having at least one unmeasurable electrolyte item is removed from transport targets.

9. The automatic analyzer according to claim 5, further comprising
a buffer module,
wherein when a reexamination request is issued to a sample present in a buffer module in the analysis module that constitutes one groups sample is transported to an analysis module to be connected to the buffer module.
